# EUROPEAN PATENT APPLICATION

(11) **EP 1 445 709 A1**
(43) Date of publication of application: **11.08.2004**
(21) Application number: 02803093.0
(22) Date of filing: 21.10.2002
(51) Int. Cl.: G06F 17/30

(54) **INFORMATION SEARCH SUPPORT APPARATUS&COMMA; COMPUTER PROGRAM&COMMA; MEDIUM CONTAINING THE PROGRAM**

(30) Priority: 14.11.2001 JP 2001348151
(71) Applicant: Jam Corporation, Tyuo-ku, Tokyo 104-0043 (JP)
(72) Inventor: NOGUCHI, Sumio, Minato-ku, Tokyo 107-0062 (JP); ABE, Yoshiyuki, Yokohama-shi, Kanagawa 225-0003 (JP)
(74) Representative: Haley, Stephen
(86) International application number: PCT/JP2002/010881
(87) International publication number: WO 2003/042869

(57) **Abstract**

There are provided a section for communicating with a user terminal, a section for accessing a provision information database, a section for acquiring a search keyword from the user terminal, a section for obtaining provision information from provision information database on the basis of the search keyword, a section for transmitting a detailed keyword collection prepared by aggregating the provision information to the user terminal, a section for obtaining a word as selected from the detailed keyword collection by the user terminal, a section for searching the provision information database with the selected word as a search keyword to obtain corresponding provision information, and a section for transmitting the provision information as obtained to the user terminal as a search result.

## Description

### TECHNICAL FIELD

The present invention is related to an information search support system for enabling a user to surely and quickly access a target information by intervening in the data exchange path between the source of information and a user terminal when the user aims to obtain the target information from among the huge amount of information available on an information communication network such as the Internet.

### BACKGROUND ART

Along with the popularization of information communication networks, especially the Internet, users have obtained an environment to access a huge quantity of information. On the other hand, it is becoming difficult to directly obtain target information from among the huge quantity of information. For this reason, for example on the Internet, the websites called search sites are being utilized widely. Search sites provide an information search service for users to access required information from a huge quantity of information by a computer system or a program, called a search engine, operating with WWW servers.

Search engines accumulate and manage in an accompanying database (provision information database) the information (provision information), such as contents, locations and so forth in respect to a large amount of information on the Internet, which can be used as a clue for acquiring the information which the user finally wants. Search engines inquire search queries accepted from the browsers of client computers operated by the user (user terminals) to a provision information database and return the corresponding list of provision information in the form of a web page as a search result. The contents of a provision information may include the complete information which can be obtained from the location (URL) of the source of information, or may include only the summary or excerpt from the complete information. A user can find from the list of the provision information shown as a search result, a provision information which (probably) includes contents about the information which is wanted, and obtains the target information by specifying the URL attached to the provision information with the browser.

Search engines includes robot type search engines and directory type search engines by the difference in the procedure of obtaining information as the sources of provision information, or in the structure of the provision information database and so forth. Robot type search engines collect Web pages on the Internet at any time and stores the collected Web pages with their URLs in a provision information database by a computer called a crawler robot. A robot type search engine then refers accepted search keywords from user terminals with the provision information database and performs a full text search. In many cases, the head portion of the body of the corresponding Web pages are shown as a search result within a predetermined number of letters.

On the other hand, directory type search engines employ a database structure in which multiple categories are systematized in the form of a hierarchical tree-like (directory) structure and multiple provision information are classified into any of the lowest level categories. A user traces directories from an upper level to a lower level, while predicting in which category the target information is included. Then, the category which includes the target provision information is found. Alternatively, by inputting a search keyword in a predetermined column of a form, the search engine searches for the category including such search keyword. Then, the provision information included in the searched categories are returned to the user terminal in the form of a list as search results. In many directory type search engines, Web pages are actually retrieved followed by checking the contents thereof and generating the summaries of the contents at the management and operation side in order to provide the summaries as provision information. At any rate, there is no difference in the basic function to acquire corresponding provision information by accessing a provision information database based on a search keyword as given, and by displaying the list of corresponding provision information in a browser.

At present, because of the performance upgrade of hardware itself, and the improvement of search algorithms and the effective design of data storage structures, search engines are capable of searching for the same provision information from indistinct search keywords or synonyms (computer, computer, PC, personal computer and the like), as well as extracting search keywords as separate words by interpreting the context of a natural sentence as input, evaluating how close a plurality of search keywords are located to each other within the body of a Web page, determining the presenting order in the search result list in accordance with the frequency of emergence of the respective search keywords and so forth. Incidentally, the technique of information searching is explained in detail in "Structuring and Searching Information" , Shojiro Nishio and other five authors, First Edition, March 27, 2000, pp. 52 - 71 and pp. 264 - 277.

Because of the improvement of searching algorithms and database structures, recent search engines are designed to provide the same information as search results when any search keywords are given as long as the meaning of the keyword is the same. However, information targeted by a wide variety of users are diverse from backyard information to professional information such as academic theses, and even if the same search keywords are given to a search engine by different users, it does not necessarily mean that each user wants the same information. For example, a person who wants to purchase a particular television, and a person who wants to know specifications of a particular television, have an entirely different purpose of obtaining information. Nevertheless, it is easily imaginable that similar terms are chosen as search keywords.

### DISCLOSURE OF THE INVENTION

The present invention has been made by taking into consideration the above described problems of the conventional searching technique. It is an object of the present invention to provide an information search support system capable of providing information, which is targeted by users with a high degree of accuracy from various information searched by commonplace search keywords when the users search an information communication network for information.

In order to accomplish the above described object, the information search support system according to the present invention comprises: a section for communicating with a user terminal operated by a user through a predetermined information communication network; a database access section for accessing a provision information database which accumulates and manages a variety of information provided to the user; an input keyword acquisition section for acquiring a search keyword which is input by the user terminal through communication with the user terminal; a search section for referring to the provision information database for the search keyword acquired by the input keyword acquisition section and obtaining a table in which corresponding provision information is arranged in a predetermined format; a detailed keyword collection transmission section for aggregating the provision information table obtained by the provision information search section, preparing a detailed keyword collection which contains multiple words to be search keywords and the locations of information relating to the respective words, and transmitting the detailed keyword collection to the user terminal; a detailed search condition acquisition section for acquiring a word selected from the detailed keyword collection by the user terminal; a detailed search section for referring to the provision information database for the word received from the detailed search condition acquisition section as a search keyword, and obtaining corresponding provision information items; and a search result transmission section for arranging the provision information obtained by the detailed search section as search result information in a predetermined format, and transmitting the information to the user terminal.

Alternatively, the information search support system may comprise: a section for communicating with a user terminal operated by a user through a predetermined information communication network; a database access section for accessing a provision information database which accumulates and manages a variety of information provided to the user; an input keyword acquisition section for acquiring a search keyword which is input by the user terminal through communication with the user terminal; a search section for referring to the provision information database for the search keyword acquired by the input keyword acquisition section and obtaining a table in which corresponding provision information is arranged in a predetermined format; and a detailed keyword collection transmission section for aggregating the provision information table as obtained by the search section, preparing a detailed keyword collection which contains multiple words to be search keywords and the locations of information relating to the respective words, and transmitting the detailed keyword collection to the user terminal.

The above described information search support system may comprise a section for storing database location information which associates multiple search keywords with the locations of the provision information database, wherein the search section acquires the location of the provision information database corresponding to a search keyword based on this database location information and refers to the provision information database in the location for the search keyword.

In accordance with the present invention, the search section may be designed to obtain the provision information themselves rather than a table in which the provision information are arranged in a predetermined format. The information search support system designed in this manner comprises: a section for communicating with a user terminal operated by a user through a predetermined information communication network; a database access section for accessing a provision information database which accumulates and manages a variety of information provided to the user; an input keyword acquisition section for acquiring a search keyword which is input by the user terminal through communication with the user terminal; a search section for referring to the provision information database for the search keyword acquired by the input keyword acquisition section and obtaining corresponding provision information; a provision information division section for dividing a document contained in the provision information obtained by the search section into words; and a search result transmission section for transmitting, to the user terminal, a detailed keyword collection describing the correspondence between the respective words divided by the provision information division section and the provision information which is the source of the divis ion of the respective words.

Alternatively, the information search support system may comprise: a section for communicating with a user terminal operated by a user through a predetermined information communication network; a database access section for accessing a provision information database which accumulates and manages a variety of information provided to the user; an input keyword acquisition section for acquiring a search keyword which is inputted by the user terminal through communication with the user terminal; a search section for referring to the provision information database for the search keyword acquired by the input keyword acquisition section and obtaining corresponding provision information; a provision information division section for dividing a document contained in the provision information as obtained by the search section into words; and a detailed keyword collection transmission section for preparing a detailed keyword collection in which words divided by the provision information division section are described and transmitting the detailed keyword collection to the user terminal; a detailed search condition acquisition section for acquiring a word selected from the detailed keyword collection by the user terminal; a detailed search section for referring to the provision information database'for the word acquired by the detailed search condition acquisition section as a search keyword, and obtaining corresponding provision information; a search result transmission section for arranging the provision information obtained by the detailed search section as search result information in a predetermined format, and transmitting the information to the user terminal. Incidentally, the detailed keyword collection may describe the correspondence between each of the divided words and the provision information which is the source of division of each word.

Furthermore, the information search support system may be designed in order that, if a word as obtained by the search condition acquisition section is not contained in a certain provision information included in the detailed keyword collection transmitted to the user terminal in advance, this provision information is excepted out of the detailed keyword collection to prepare a new detailed keyword collection which is then transmitted to the user terminal.

In the case of the information search support system obtaining the provision information themselves, a section may be provided for storing a requirements base word dictionary containing multiple words which are classified in accordance with particular requirements, wherein the detailed keyword collection transmission section prepares a detailed keyword collection describing the correspondence of each divided word and classification requirements. The provision information division section may be designed to divide the provision information obtained in accordance with the requirements base word dictionary.

In the case where a storage section is provided for storing a requirements base word dictionary, the detailed keyword collection transmission section prepares a detailed keyword collection containing other words which belong to the same requirements as the divided words. Still further, the detailed keyword collection transmission section may prepare a detailed keyword collection describing the relationship among the requirements, the words, and the provision information, in a hierarchical structure with one or more words associated to each requirement, and one or more provision information associated to each word. Incidentally, the information search support system may be designed in order that the respective requirements are further classified into predetermined categories, and the detailed keyword collection transmission section prepares a detailed keyword collection in which the respective categories are arranged in the uppermost level of the hierarchical structure.

In the case of the information search support system provided with a detailed search condition acquisition section, while this detailed search condition acquisition section accepts weight information of each search keyword selected by the user terminal, the search result transmission section evaluates the provision information obtained on the basis of the presence or absence of a word to which weight information is designated and the value of the weight information designated to the word, and transfers a highly evaluated provision information with priority. Also, the search result transmission section may include the total points based on the value of weight information of the provision information within the provision information to be transmitted to the user terminal.

In any one of the above described information search support systems, a section for storing a synonym dictionary containing synonyms of representative search keywords which are provided to the provision information database, is provided wherein the search section refers to the synonym dictionary with a search keyword obtained from the input keyword acquisition section as a synonym to retrieve a corresponding representative search keyword, and refers to the provision information database for this representative search keyword.

In the case of the information search support system provided with a storage section for storing a synonym dictionary, the search section refers to the provision information database for the representative search keyword and, in addition, for synonyms of this representative search keyword. The detailed keyword collection transmission section may prepare a detailed keyword collection describing the representative search keywords which are synonyms of the divided words in place of the divided words or in addition to the divided words.

The information search support system may be designed in order that, a plurality of synonym dictionaries are prepared for the respective fields, the input keyword acquisition section receives dictionary selection information from the user terminal to designate a synonym dictionary of a particular field, and the search section refers to the synonym dictionary of the field corresponding to the dictionary selection information for the search keyword. Alternatively, the information search support system may be designed in order that, a plurality of synonym dictionaries are prepared for the respective fields, a section is provided to determine a synonym dictionary of a particular field on the basis of a search keyword obtained by the input keyword acquisition section, and the search section refers to the synonym dictionary determined by the section for the search keyword.

Furthermore, the present invention is applicable to a computer program for enabling a computer to function as the information search support system by installing and conducting the computer program in the computer, and a program storage medium for storing this computer program.

### BRIEF DESCRIPTION OF THE DRAWINGS

Fig. 1 is a view showing a network configuration including an information search support system in accordance with an embodiment of the present invention.
Fig. 2 is a diagram showing the communication procedure between respective computers on the Internet and the information search support system in accordance with a first embodiment of the present invention.
Fig. 3 is a schematic structural diagram of a database location information managed by the information search support system in the above described first embodiment of the present invention.
Fig. 4 is a schematic structural diagram of a provision information which is obtained from a search engine by the information search support system in the above described first embodiment of the present invention.
Fig. 5 is a schematic diagram showing an initial search screen to be transmitted to a user terminal from the information search support system in the above described first embodiment of the present invention.
Fig. 6 is a schematic diagram showing the detailed keyword selection window to be transmitted to a user terminal from the information search support system in the above described first embodiment of the present invention.
Fig. 7 is a schematic diagram showing a user interface in the above described detailed keyword selection window at the user terminal.
Fig. 8 is a schematic diagram showing a user interface in the above described detailed keyword selection window at the user terminal.
Fig. 9 is a schematic diagram showing a search result screen to be transmitted to the user terminal from the information search support system in the above described first embodiment of the present invention.
Fig. 10 is a schematic structural diagram of a detailed keyword collection prepared by the information search support system in accordance with the above described first embodiment of the present invention.
Fig. 11 is a diagram showing the communication procedure between respective computers on the Internet and the information search support system in accordance with a second embodiment of the present invention.
Fig. 12 is a schematic structural diagram of a word dictionary based on requirements managed by the information search support system in the above described second embodiment of the present invention.
Fig. 13 is a schematic diagram showing the content of a provision information obtained by the information search support system in the above described first embodiment of the present invention.
Fig. 14 is a schematic diagram showing the words extracted from a provision information item and obtained by the information search support system in the above described first embodiment of the present invention.
Fig. 15 is a schematic diagram showing a state when the words extracted from a certain provision information are classified according to requirements by the information search support system in the above described first embodiment of the present invention.
Fig. 16 is a schematic structural diagram of a detailed keyword collection prepared by the information search support system in the above described second embodiment of the present invention.
Fig. 17 is a schematic diagram of a detailed keyword screen to be transmitted to a user terminal from the information search support system in the above described second embodiment of the present invention.
Fig. 18 is a schematic diagram showing a user interface in the above described detailed keyword screen at a user terminal.
Fig. 19 is a diagram showing the communication procedure between respective computers on the Internet and the information search support system in accordance with a third embodiment of the present invention.
Fig. 20 is a schematic diagram showing a search result screen to be transmitted to a user terminal from the information search support system in accordance with the above described third embodiment of the present invention.

### BEST MODE FOR CARRYING OUT THE INVENTION

### === Network Configuration ===

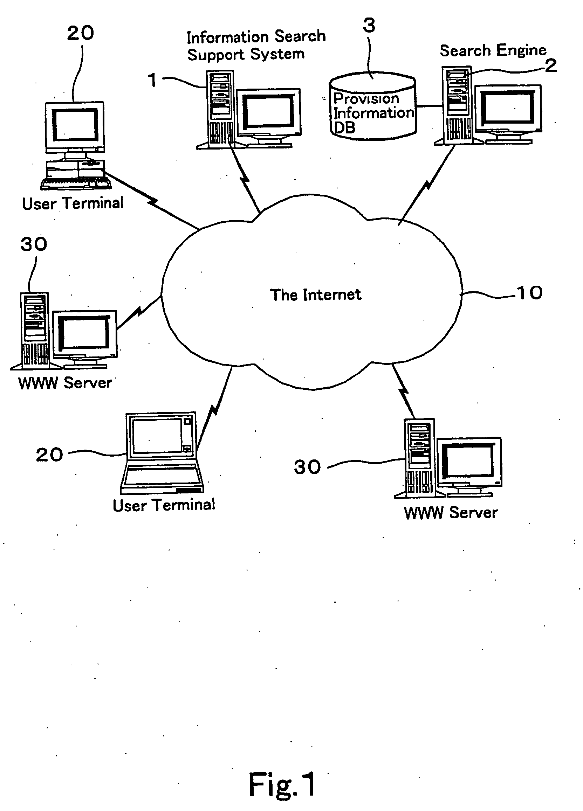

The Internet is taken here as an example of an information communication network which includes the information search support system in accordance with an embodiment of the present invention. Fig. 1 is a view showing the network configuration thereof. The Internet 10 is connected with an information search support system 1 of the present invention, user terminals 20 such as personal computers in which browsers operated by the general public users are installed, and multiple WWW servers 30. It is assumed here that the information wanted by a certain user is available to the public from a web page of one of the WWW servers 30.

In this exemplary network configuration, the information search support system (to be hereinafter described as the support system) 1 has the basic function of a WWW server and provides an information search support service in association with a search engine 2. Of course, the function of the search engine 2 may be implemented within the support system 1 itself. Anyway, what is necessary is just to provide the function for accessing a provision information database 3 which accumulates and manages the contents and the locations of multiple Web pages collected from the Internet 10.

Also, the hardware of the support system 1 may be structured by a single computer or may be structured by a plurality of computers which cooperate with each other. In a structure with a plurality of computers, the communication pathway between these computers may be a structure by an exclusive line, a LAN, a VPN or any other private communication network, or alternatively may be a structure communicating via a public information communication network such as the Internet 10.

### ==== Information Search Support Service ===

The support system 1 provides, through an HTTP communication with user terminals 20, the information search support service for presenting provision information as reliable clues to information which the user wants. The "information search support service" provides a user interface environment devised so that, unlike "information search services" provided by conventional search engines, a user can naturally find targeted information. For this purpose, the management structure of various information, and information processing in the communication process with other computers through a communication network are devised.

The technical concept of the present invention includes a range of variations in user interface data management structure, communication procedure, information processing and so forth. Hereafter, several embodiments are selected from among the variations to describe in detail the present invention.

### === First Embodiment ===

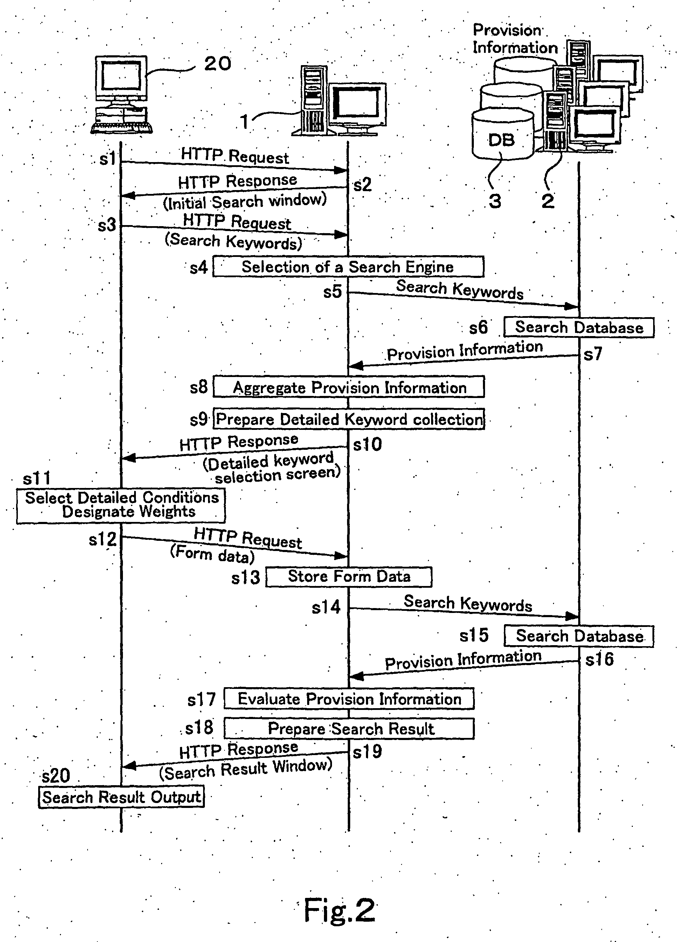

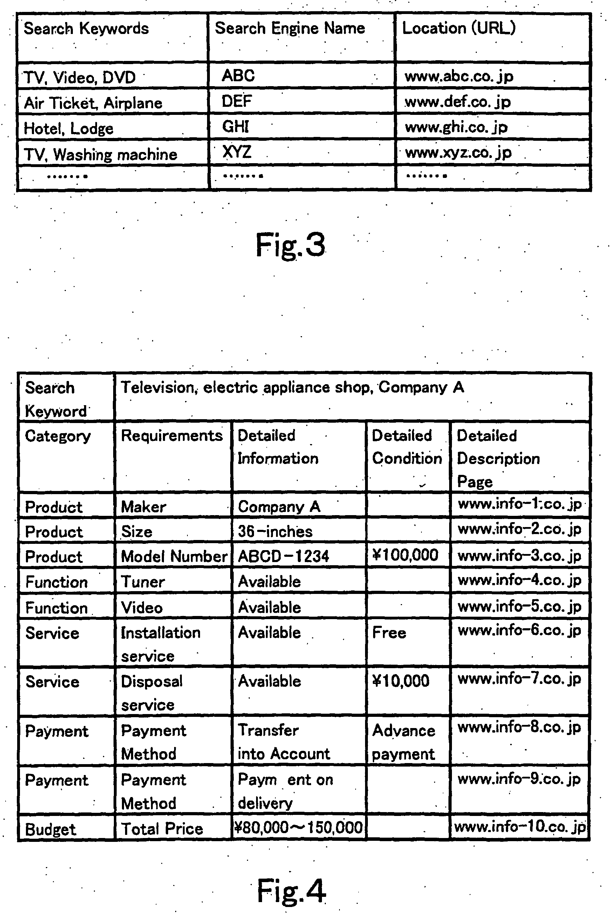

Fig. 2 is a diagram showing the communication procedure between the respective computers 2 and 20 on the Internet 10 and the support system 1a in accordance with a first embodiment of the present invention. Incidentally, in this example, the support system 1 is configured to make use of a plurality of external search engines 2 while database location information associating a search keyword to a search engine is stored in a storage resource of the support system laside. Fig. 3 is a schematic structural diagram of this database location information.

The provision information accumulated in the provision information database 3 of the respective search engine 2 is a table in a predetermined format of word groups indicative of the detailed information and contents of each of the multiple web pages collected from the Internet 10. The provision information database 3 manages the table associated with the search keywords. In this table, the respective words are organized in a state appropriately arranged in the directory structure based on a predetermined classification system. Fig. 4 is a schematic structural diagram of a provision information in the provision information database. In this example, the respective layers of categories, requirements, detailed information, and detailed conditions are specified from the upper layer to the lower layer, and within each layer the words according to the contents of the Web page are classified. For example, if provision information corresponding to any of the search keywords "television", "electric appliance shop" and "company A" contains as the content of a Web page which is the source of information of this provision information, the information that the "maker" corresponding to the category "product" is "company A", then the words "product", "maker" and "company A" construct in a hierarchical structure in this order to associate the specific word "company A" to a predetermined URL. For example, this URL may be the homepage of the Company A.

Furthermore, in the case where the content of a Web page belongs to the "service" category in which an "installation service" is "available" as the service and the cost is " free", the hierarchical relationship of "service", "installation service", "available" and " free" is associated with the URL of the Web page (detailed explanation page) in which the information is specifically described. Of course, a Web page providing the definition of the "installation service" may be associated with a detailed explanation page. Detailed explanation pages are not only limited to pages made public in other WWW servers on the Internet, but also pages may be specially provided within the support system 1a or the search engine 2.

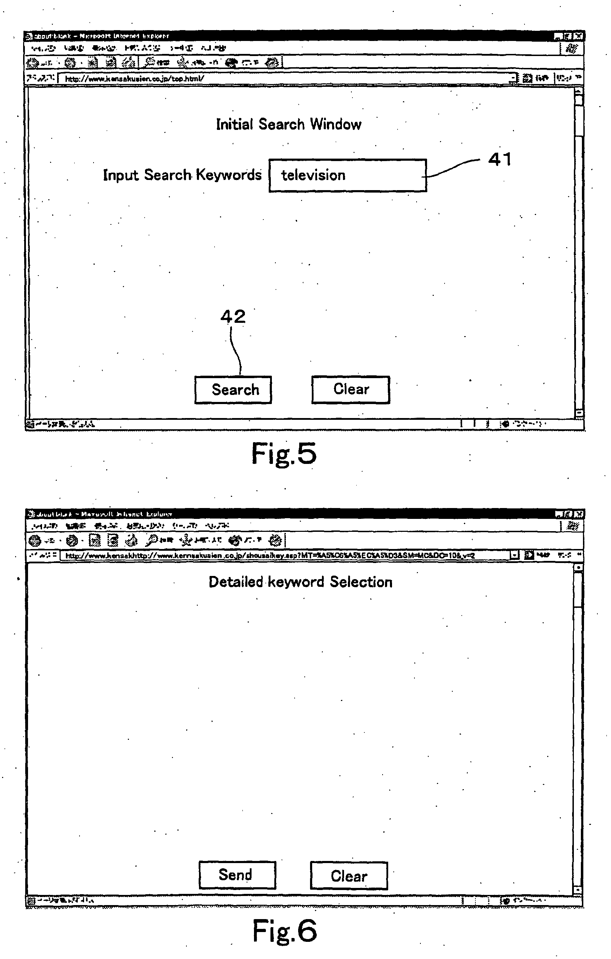

Figs. 5 to 9 are schematic views showing screens displayed in a user terminal 20 in the process when the support system 1a provides the information search support service. A user requests a Web page, which is made public by the support system 1a, by designating a predetermined URL with the browser of his/her own user terminal 20 (s1 and s2). This Web page (initial search screen: Fig. 5) contains an input form 41 for inputting a search keyword(s) and a function of transmitting the information input to this form 41 to a predetermined CGI program implemented in the support system 1a. More specifically speaking, after inputting a search keyword(s) to this form 41 and designating a "search" button 42 in the same page, an HTTP request which includes a description to transmit the search keyword(s) to the above CGI program as form data (s3) is sent to the Internet 10. In this case, it is assumed that the search keyword "television" is input and that this keyword is sent to the CGI program.

The support system 1a serves to identify the location of a search engine corresponding to the search keyword "television" by the CGI program based on to the database location information followed by transmitting the search keyword to search engine(s) 2 in the location (s4, s5). In this case, it is assumed that locations corresponding to the two search engines 2 called ABC and XYZ are identified. These two search engines 2 then search the own provision information databases 3 based on the given search keyword, and return data arranged as described above (arranged provision information) containing relevant provision information (s6, s7).

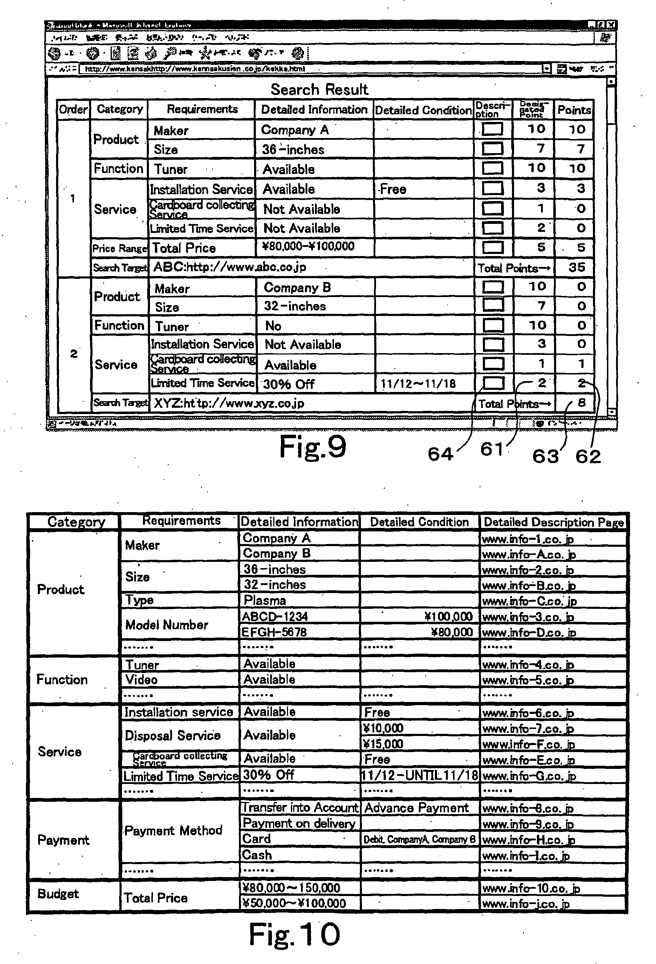

The support system 1a receives the arranged provision information as returned from the respective search engines 2, compiles detailed information and detailed conditions for the respective categories and the requirements contained therein, and prepares a detailed keyword collection in which the results thereof are listed (s8, s9). Fig. 10 is a schematic view showing the configuration of this detailed keyword collection. This detailed keyword collection is processed in the form of a Web page and returned to the user terminal which has sent the above described HTTP request as a HTTP response.

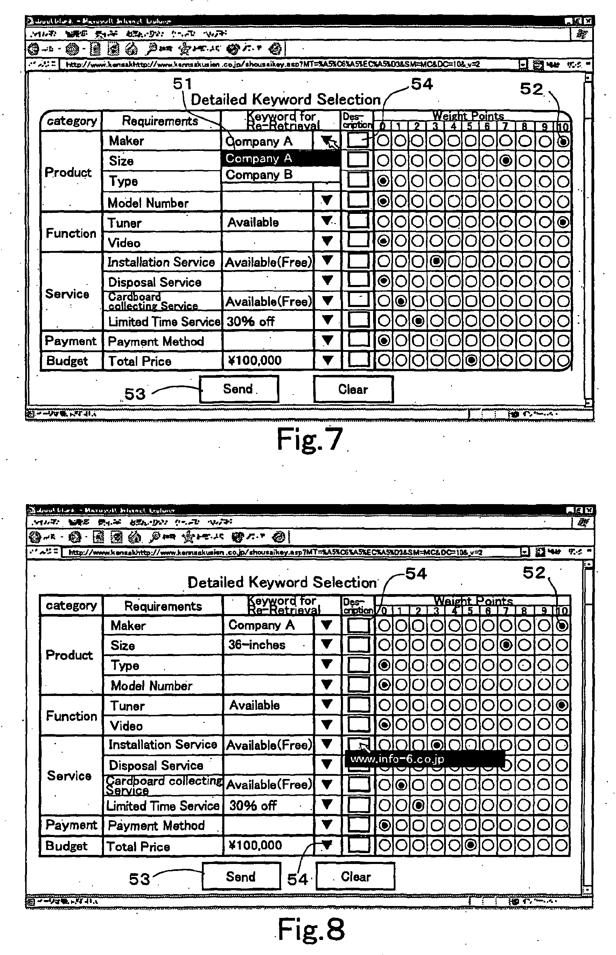

This Web page (detailed keyword selection window: Fig. 6 to Fig. 8) includes the function of enabling the user to select words contained in the detailed information and the detailed requirements of the respective requirements, and the function of transmitting the words as selected to the support system 1a as search keywords. Moreover, in this example, there is also provided the function of specifying the weights to the words which a user selects. When this detailed keyword selection screen is displayed in a user terminal 20, a detailed keyword collection is displayed in the form of a table in which a search keyword for re-searching can be selected from the words associated with the detailed information and the detailed conditions associated with each requirement from a drop-down list box 51. Weights can be designated by radio buttons 52 with points having 11 levels from 0 to 11. When the detailed keyword selection window has been sent, the drop-down list box 51 is a blank space with no words being selected, and weight points selection screen are all set to 0 (Fig. 6). Auser selects a word to be a condition for obtaining target information from each drop-down list box 51 (search keyword for re-searching) from each drop-down list box. Also, the user designates a weight point in accordance with the importance of the search keyword for re-searching (s11: Fig. 7).

Incidentally, for each word of the detailed conditions and the detailed requirement corresponding to each requirement, a link is set to the Web page (description page) which is the source of the word. When the user wants to acquire knowledge or definition about a certain word, the corresponding description page can be obtained by designating the word as a search keyword for re-searching and then pressing a "description" column 54 (Fig. 8). Then, if the user conducts a selection operation for each requirement and designates a "send" button 53, the information corresponding with the selection operation is transmitted to the support system 1a as form data. Meanwhile, not only standard HTML input forms, but also any appropriate techniques using such as JAVA (trademark registered) applets can be used to implement the function of transmitting information in accordance with the detailed information, the detailed requirement and the designating operation of weight points to the support system 1a in the detailed keyword selection screen.

When the words associated with the detailed information and the detailed requirement are transmitted from the user terminal 20, with these words as search keywords, the support system 1a identifies again a corresponding search engine(s) 2 on the basis of the database location information. Then, the search keywords are given to the identified search engine 2 to re-search corresponding provision information (s12 to s15).

when receiving the provision information as re-searched from the search engine 2, the support system 1a evaluates the contents of the provision information on the basis of the presence or absence of the words as designated by the user and the weight information as designated to the word (s16, s17). For example, while the provis ion information containing keywords given higher weight points in respect to the search keywords for re-searching are extracted with priority, when a provision information contains a word matching a search keyword for re-searching, the weight point as designated by the user is added to the weight points of the word. Then, after calculating the sum of weight points for each provision information, a Web page is prepared by the contents of the provision information of the provision information given the highest point score (search result screen: Fig. 9) and returned to the user terminal (s18 to s20). In the example as illustrated in Fig. 9, in regard to the search keywords for re-searching as designated in the detailed keyword selection screen by the user, there are the weight points 61 as designated, the points 62 of the search keywords for re-searching in the provision information, the sum of the points 63, the buttons 64 for obtaining the description pages corresponding to the search keywords for re-searching and so forth. Moreover, the URL 65 of the search engine 2 which is the source of the provision information is also provided. Of course, if URL of the source of information is included in the provision information, the URL can be included in the search results, to enable users to directly retrieve required information from the source of information.

### === Second Embodiment ===

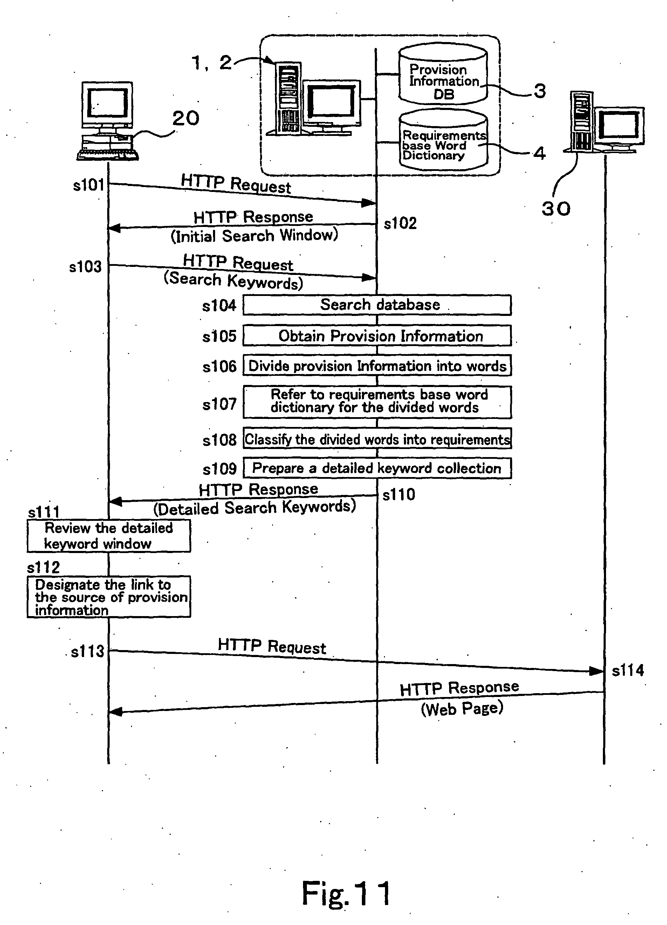

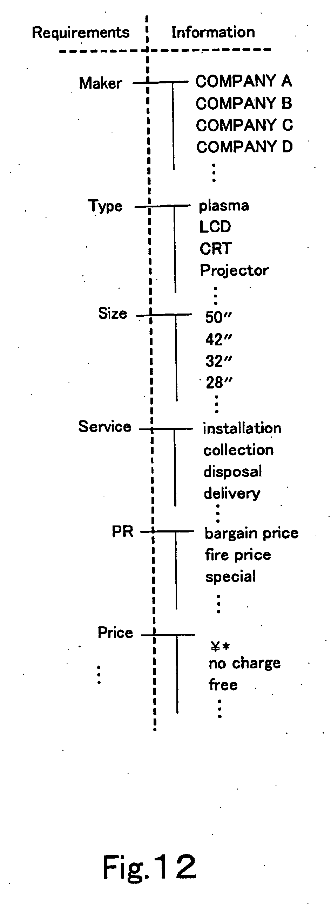

Fig. 11 is a diagram showing the communication procedure between respective computers on the Internet and the support system in accordance with a second embodiment of the present invention. This support system 1b has the function as the search engine 2 and is accompanied with a provision information database 3. In addition, provision information are the same as the provision information presented by conventional search sites which contain the contents of Web pages and the URLs thereof. However, the support system 1b is provided with a requirement base word dictionary 4 containing multiple words respectively in association with the predetermined requirements in a storage resource thereof, in addition to the provision information database 3. Fig. 12 is a schematic diagram showing the structure of this requirement base word dictionary.

Also in this embodiment as well as the 1st embodiment, a user obtains a Web page, which is an initial search screen containing an input form for inputting search keywords, from the support system 1b by the browser of the user's own user terminal, and returns a search keyword(s) to the support system 1b. The support system 1b then obtains provision information by referring to the provision information database 3 with this search keyword (s) through an own search engine function (s101 to s105).

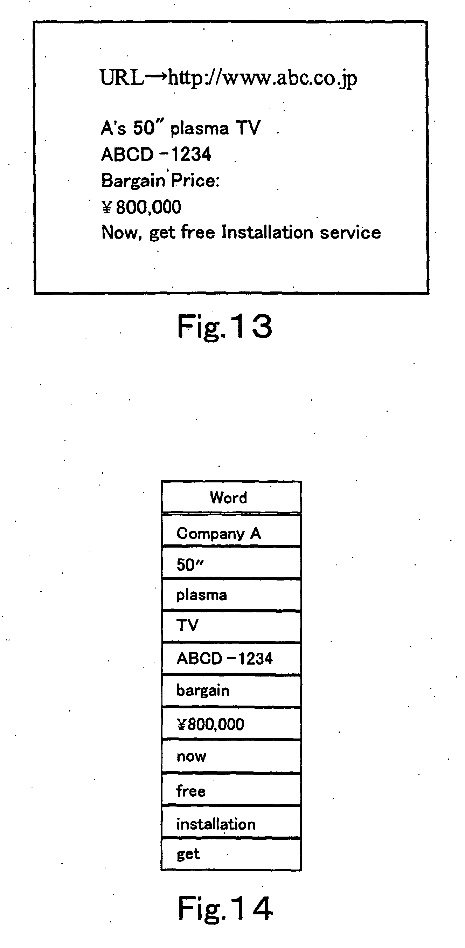

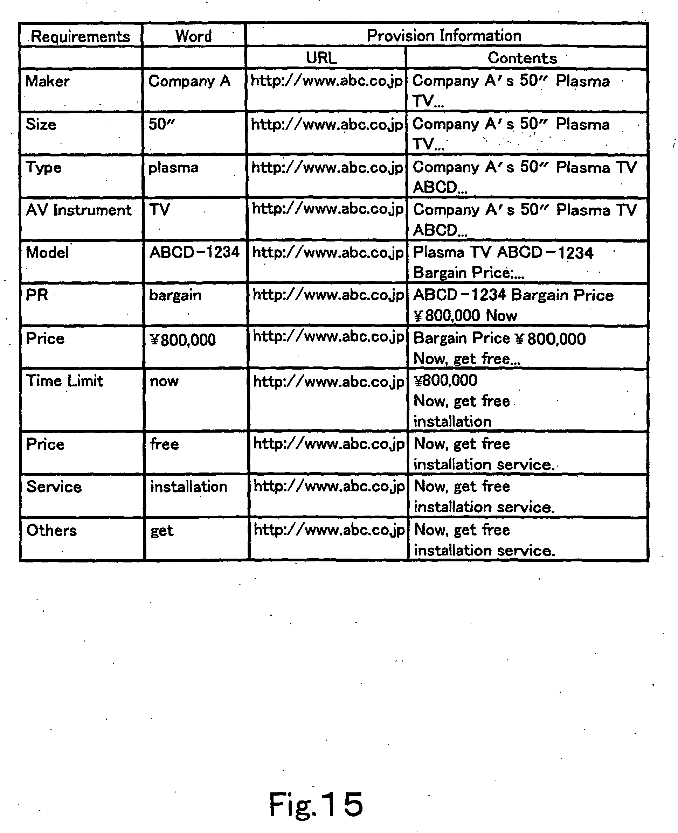

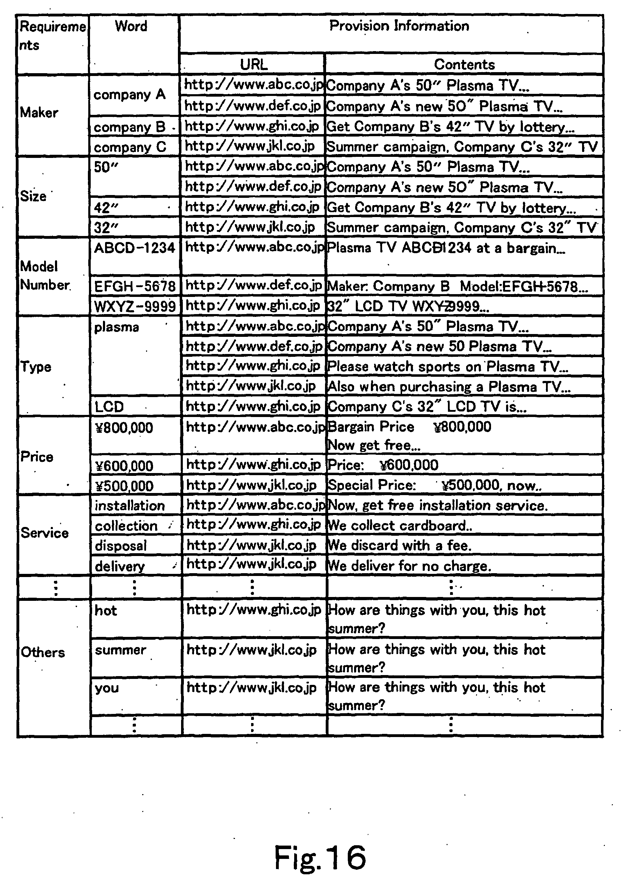

Next, in respect to multiple obtained provision information items, the support system 1b divides a document contained therein respectively into each word, searches the above requirement base word dictionary for the respective words, and obtains the requirements into which the respective words are classified (s106 to s108). Words which are not classified into any requirements are classified into "others". In respect to multiple provision information, a detailed keyword collection is prepared by aggregating the respective words with the associated provision information which is the source thereof in accordance with requirements (s109). Fig. 13 to Fig. 16 are schematic diagrams showing the preparation process of the detailed keyword collection. In this case, it is assumed that "television" and "plasma" are given to the support system 1b as search keywords. A document (Fig. 13) of a certain provision information item, words (Fig. 14) extracted from this document, an arrangement (Fig. 15) of these words classified according to requirements, and a detailed keyword collection (Fig. 16) inwhich these words are aggregated together with other provision information are shown.

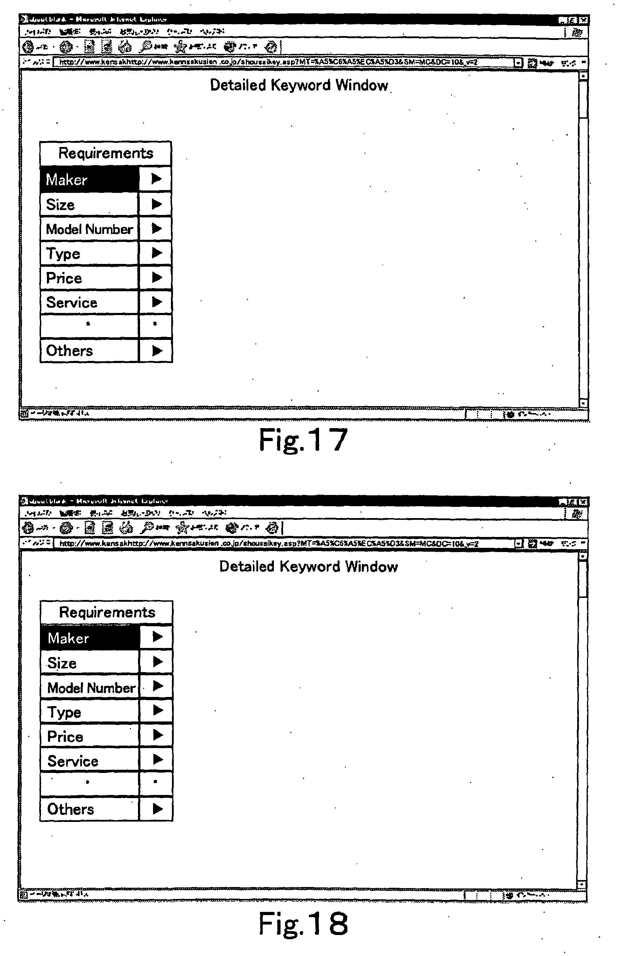

The support system 1b transmits the detailed keyword collection prepared by the above process to the user terminal 20 in the form of a Web page. Fig. 17 and Fig. 18 show schematic diagrams of the Web page (detailed keyword screen) of the detailed keyword collection transmitted to the user terminal 20. In the initial state of this screen, a table of requirements is displayed together with the search keywords which the user inputted in advance (Fig. 17). When a particular requirements is designated in the user terminal 20, the words and the URL as associated hierarchically therewith as a low layer of the requirements are displayed in a tree-like manner, and when a particular word is designated, the contents thereof and the URL of the source of information are to be displayed as a corresponding provision information (Fig. 18). The descriptions of URLs are provided with links thereto so that when a user wants to acquire more detailed information, the Web page of the source of information can be obtained by designating a URL in a browser (s111 to s114).

### === Third Embodiment ===

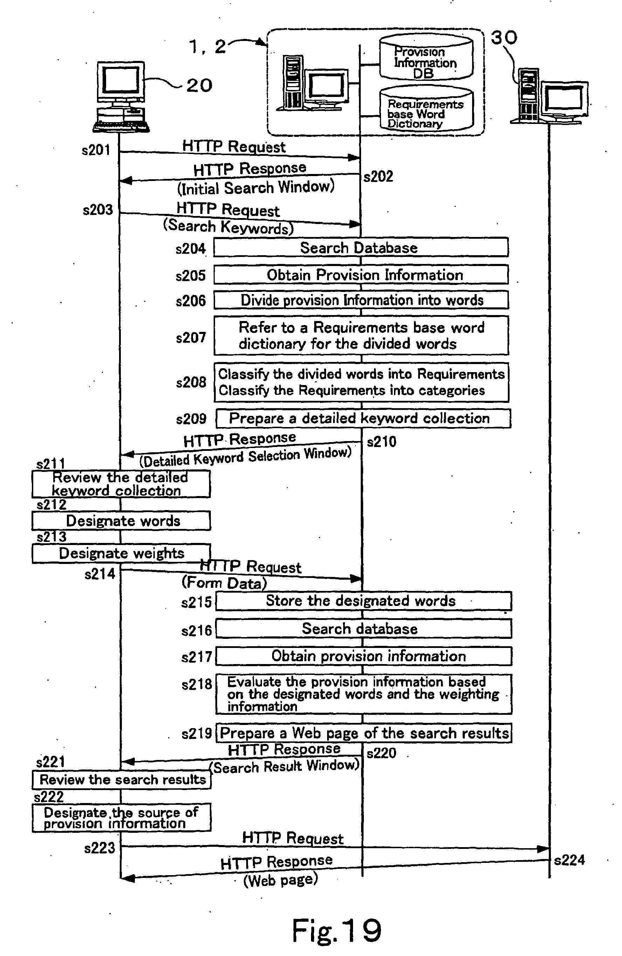

Fig. 19 is a diagram showing the communication procedure between respective computers on the Internet and the support system in accordance with a third embodiment of the present invention. This support system 1c is designed as a combination of the first embodiment and the second embodiment.

The support system 1c of this example is provided with the function of the search engine 2 and the requirements base word dictionary of the second embodiment is also stored in its storage resource. However, in this example like in the first embodiment, categories are defined as a higher rank classification of the requirements. The accompanying provision information database 3 accumulates and manages the provision information which are formally similar to the provision information as provided by the conventional search site.

In this case, the steps that substantially conform with the second embodiment are taken from the step of obtaining the initial search screen same as illustrated in Fig. 5 from the support system 1b by the browser of a user terminal 20 to the step of the support system 1c preparing a detailed keyword collection by associating the requirements, the respective words, and the provision information which is the sources of these words (s201 to s209). However, it differs in that the respective requirements in the detailed keyword collection are classified into categories of a higher rank classification in the same manner as in the first embodiment, while the structure of the detailed keyword collection is equivalent to that of the first embodiment as illustrated in Fig. 10.

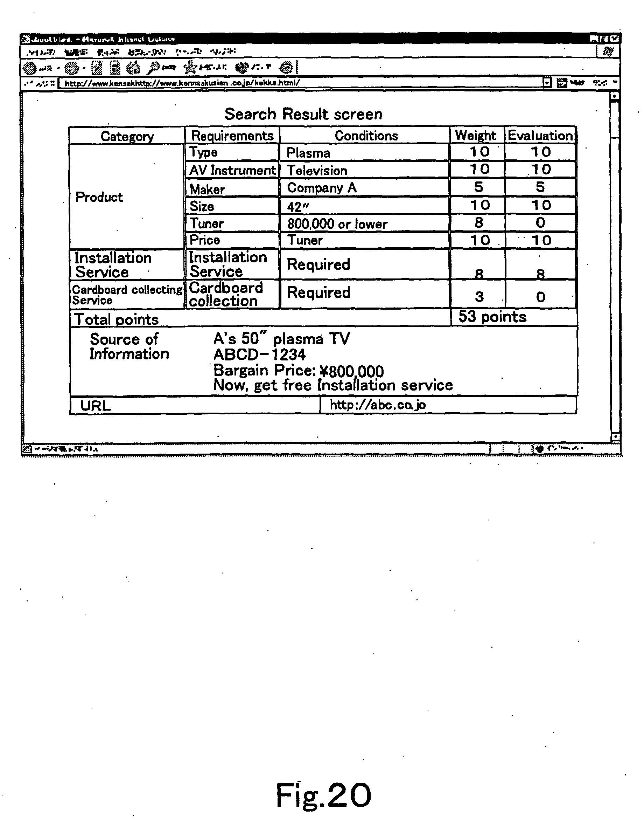

Moreover, while a Web page is prepared as a detailed keyword selection screen on the basis of this detailed keyword collection and is transmitted to a user terminal, the procedure of re-searching provision information on the basis of the search keywords for re-searching as selected by this user terminal is the same as in the first embodiment except that the provision information are retrieved by the search engine function of the support system itself (s210 to s217). The procedure of evaluating provision information and transmitting such results of evaluation created in a search result screen subsequent to the above procedure is also the same as in the first embodiment (s218 to s221). However, the third embodiment is different from the first embodiment in that the information included in the search results include information of the sources of the provision information and the contents of the provision information. Fig. 20 shows a schematic diagram of a search result screen in accordance with the third embodiment. The URL of the provision information as the source of information is described together with the designated weight points as the evaluation of the words classified by the requirements selected by a user in the detailed keyword selection screen. Information can be obtained directly from the source of information by designating this URL in the browser (s222 to s224).

### === Extraction of Words from Provision Information Items ===

In the case of the above second embodiment or the third embodiment, the respective words as extracted from provision information are classified on the basis of a word base requirements dictionary. Without limiting to these embodiments, it is possible to have a structure to associate extracted words, as they are, with provision information as the sources thereof and to return the correspondence table between the words and the provision information as search results to a browser terminal. By this configuration, it is possible to provide users with the original words contained in the provision information so that the user side has more alternatives from which to choose a path to reach the target information.

On the other hand, when extracting words from provision information, only the words contained in the word base requirements dictionary can be extracted from the provision information. By this configuration, unnecessary words are excepted out of the provision information to save the access time and the procedure required for obtaining the target information.

Alternatively, it is possible to extract words from provision information with reference to a conventional dictionary while the detailed keyword collection also includes other words which belong to the same requirements as these words.

### === Designation of The Fields of Search Keywords (Synonym Dictionary Selection) ===

In each of the above mentioned embodiments, when the search keyword which the user inputted is an abbreviation or is not a generally used term, the accuracy of searching for provision information is degraded. Forthis reason, a synonym dictionary may be provided in the support system to associate representative search keywords, which can be surely interpreted by the search engine, with synonyms and quasi-synonyms, so that the search keywords transmitted from user terminals are replaced by the correct representative search keywords, which are then used in referring to the provision information database. Of course, it is possible to search by referring to the provision information database also for the quasi-synonyms as well as the representative keywords without omission.

Furthermore, it is possible to adopt the representative search keywords, which are synonymous with divided words in place of the divided words as a word to describe, in a detailed keyword collection. Of course, both the divided words and the representative search keywords can be listed together. By including representative search keywords in the detailed keyword collection, when search keywords are referred to the provision information database again, appropriate words are given as keywords to improve the accuracy of searching.

Even with the same search keyword, there are cases where a plurality of meanings or the "article" itself which is the object of the keyword are used in a plurality of fields. For example, the term "CD" has various meanings such as "compact disk", "cash dispenser", "cost down" and so forth. Even with the same term "compact disk", provision information of a totally different field may be mixed and retrieved depending upon whether the "article" the user intends is a CD-ROM or a music CD. Here, the field to which a search keyword belongs to can be designated by the user side. The support system is provided with synonym dictionaries for the respective fields, while a plurality of fields of synonym dictionaries are presented to be selectable in the Web page for inputting search keywords to be transmitted to user terminals. When search keywords and designation information of synonym dictionaries are received from a user terminal, search is conducted by obtaining a representative search keyword(s) by referring to the synonym dictionary (dictionaries) of the field as designated to obtain the representative search keywords. Furthermore, the object of the search may be limited to that field. Alternatively, only the information belonging to a corresponding field is used from among provision information obtained from the provision information database. By this configuration, the information the user is not targeting is excepted from the object of search to reduce the processing load on the support system.

It is possible to specify the field of a synonym dictionary, which is used in the information search support system side, on the basis of the search keywords. In the case of an exclusive keyword or a plurality of keywords, it is possible to determine a synonym dictionary.

### === Search Keyword Input Method ===

Needless to say, a plurality of search keywords are acceptable. Also, these plurality of search keywords may be designated with search conditions such as OR search, AND search and so forth. Of course, also in regard to search keywords for re-searching, a plurality of re-search keywords with search conditions thereof in respect to the same factor may be designated. Furthermore, if a search keyword for re-searching is designated as a numerical value (the screen size or the price of a television, and the like), the range of the numerical values may be limited, for example, with such terms as "no less than", "no more than", "less than" and so forth. For example, when a numerical value is recognized, a detailed keyword collection may be prepared with a hierarchical structure in which words for limiting the range of the numerical value may be associated with a low layer of the numerical number (no less than, no more than, less than, and so forth).

Search keywords input to user terminals are not limited to words, but can be natural sentences. In this case, the support system side may determine which requirements each word belongs to by using a known morphological analysis to extract words from a natural sentence for each part of speech, calculating the correlation on the basis of the semantic unity among the words (relationship in which the words depend on each other) and so forth.

### === System Configuration ===

The configuration of the system including a support system, a search engine, and user terminals is not limited to the above-mentioned embodiments. If a support system obtains provision information from external search engines, the support system and the search engines are arranged to communicate with each other through the Internet, or may be structured to communicate through a private line or a LAN.

User terminals can also be designed to substitute for some functions of the support system. A browser integral type program such as a dedicated application software, a plug-in module which cooperates with the browser is installed in the user terminals. Alternatively, the support system serves to transmit a JAVA applet when necessary to a user terminal. The support system transmits a detailed keyword collection to a user terminal as a simple word table without form function. The user terminal can provide a user interface environment to a user by the dedicated program as described above having a function designating words and weight points on the basis of the detailed keyword collection, and a function transmitting the designation information.

The mode of a user terminal may be a mobile phone equipped with a browser, in addition to a personal computer equipped with a browser. Of course, not limited to general purpose computers such as personal computers, any dedicated terminal for searching information can be used. Also, while the information communication network is not limited to the Internet, a LAN may be used to connect all or a part of the respective computers which constitute the system. At any rate, the structure is to be such which enables the respective computers to communicate in a predetermined procedure and to exchange predetermined information with each other.

In accordance with the information search support system of the present invention, words contained in provision information are classified and systemized on the basis of search keywords inputted by users, and provided to the users as a detailed keyword collection. Therefore, users can obtain the contents and the locations of provision information items associated with the words contained in the keyword collection, and re-search information by selecting more detailed search keywords from among the detailed keyword collection. As a result, users can surely obtain the target information.

## Claims

1. An information search support system comprising:
a section for communicating with a user terminal operated by a user through a predetermined information communication network;
a database access section for accessing a provision information database which accumulates and manages a variety of information provided to the user;
an input keyword acquisition section for acquiring a search keyword which is input by the user terminal through communication with the user terminal;
a search section for referring to the provision information database for the search keyword acquired by the input keyword acquisition section and obtaining a table in which corresponding provision information is arranged in a predetermined format;
a detailed keyword collection transmission section for aggregating the provision information table obtained by the provision information search section, preparing a detailed keyword collection which contains multiple words to be search keywords and the locations of information relating to the respective words, and transmitting the detailed keyword collection to the user terminal;
a detailed search condition acquisition section for acquiring a word selected from the detailed keyword collection by the user terminal;
a detailed search section for referring to the provision information database for the word received from the detailed search condition acquisition section as a search keyword, and obtaining corresponding provision information; and
a search result transmission section for arranging the provision information obtained by the detailed search section as search result information in a predetermined format, and transmitting the information to the user terminal.

2. An information search support system comprising:
a section for communicating with a user terminal operated by a user through a predetermined information communication network;
a database access section for accessing a provision information database which accumulates and manages a variety of information provided to the user;
an input keyword acquisition section for acquiring a search keyword which is input by the user terminal through communication with the user terminal;
a search section for referring to the provision information database for the search keyword acquired by the input keyword acquisition section and obtaining a table in which corresponding provision information is arranged in a predetermined format; and
a detailed keyword collection transmission section for aggregating the provision information table obtained by the search section, preparing a detailed keyword collection which contains multiple words to be search keywords and the locations of information relating to the respective words, and transmitting the detailed keyword collection to the user terminal.

3. An information search support system as set forth in claim 1 or 2, comprising a section for storing database location information which associates multiple search keywords with the locations of the provision information database,
wherein the search section acquires the location of the provision information database corresponding to a search keyword based on this database location information and refers to the provision information database in the location for the search keyword.

4. An information search support system comprising:
a section for communicating with a user terminal operated by a user through a predetermined information communication network;
a database access section for accessing a provision information database which accumulates and manages a variety of information provided to the user;
an input keyword acquisition section for acquiring a search keyword which is input by the user terminal through communication with the user terminal;
a search section for referring to the provision information database for the search keyword acquired by the input keyword acquisition section and obtaining corresponding provision information;
a provision information division section for dividing a document contained in the provision information obtained by the search section into words; and
a search result transmission section for transmitting, to the user terminal, a detailed keyword collection describing the correspondence between the respective words divided by the provision information division section and the provision information which is the source of the division of the respective words.

5. An information search support system comprising:
a section for communicating with a user terminal operated by a user through a predetermined information communication network;
a database access section for accessing a provision information database which accumulates and manages a variety of information provided to the user;
an input keyword acquisition section for acquiring a search keyword which is inputted by the user terminal through communication with the user terminal;
a search section for referring to the provision information database for the search keyword acquired by the input keyword acquisition section and obtaining corresponding provision information;
a provision information division section for dividing a document contained in the provision information as obtained by the search section into words; and
a detailed keyword collection transmission section for preparing a detailed keyword collection in which words divided by the provision information division section are described and transmitting the detailed keyword collection to the user terminal;
a detailed search condition acquisition section for acquiring a word selected from the detailed keyword collection by the user terminal;
a detailed search section for referring to the provision information database for the word acquired by the detailed search condition acquisition section as a search keyword, and obtaining corresponding provision information;
a search result transmission section for arranging the provision information obtained by the detailed search section as search result information in a predetermined format, and transmitting the information to the user terminal.

6. An information search support system as set forth in claim 5,
wherein the detailed keyword collection transmission section prepares a detailed keyword collection describing the correspondence between each of the divided words and the provision information which is the source of division of each word.

7. An information search support system as set forth in claim 6,
wherein if a word obtained by the search condition acquisition section is not included in a certain provision information included in the detailed keyword collection transmitted in advance to the user terminal, this provision information is excepted from the detailed keyword collection to prepare a new detailed keyword collection which is then transmitted to the user terminal.

8. An information search support system as set forth in any one of claims 4 to 7, comprising a section for storing a requirements base word dictionary containing multiple words which are classified in accordance with particular requirements, wherein the detailed keyword collection transmission section prepares a detailed keyword collection describing the correspondence of each divided word and classification requirements.

9. An information search support system as set forth in claim 8, wherein the provision information division section divides the provision information obtained in accordance with the requirements base word dictionary.

10. An information search support system as set forth in any one of claims 7 to 9,
wherein the detailed keyword collection transmission section prepares a detailed keyword collection containing other words which belong to the same requirements as the divided words.

11. An information search support system as set forth in any one of claims 7 to 10, wherein the detailed keyword collection transmission section prepares a detailed keyword collection describing the relationship among the requirements, the words, and the provision information, in a hierarchical structure with one or more words associated to each requirement, and one or more provision information associated to each word.

12. An information search support system as set forth in claim 11, wherein the respective requirements are further classified into predetermined categories, and the detailed keyword collection transmission section prepares a detailed keyword collection in which the respective categories are arranged in the uppermost level of the hierarchical structure.

13. An information search support system as set forth in claim 1 or 5,
wherein, while the detailed search condition acquisition section accepts weight information of each search keyword selected by the user terminal, the search result transmission section evaluates the provision information obtained on the basis of the presence or absence of a word to which weight information is designated and the value of the weight information designated to the word, and transfers a highly evaluated provision information with priority.

14. An information search support system as set forth in claim 13,
wherein, the search result transmission section includes total points based on the value of weight information as a source of transmission of the provision information within the provision information to be transmitted to the user terminal.

15. An information search support system as set forth in any one of claims 1 to 14, comprising a section for storing a synonym dictionary containing synonyms of representative search keywords which are provided to the provision information database,
wherein the search section refers to the synonym dictionary with a search keyword obtained from the input keyword acquisition section as a synonym to retrieve a corresponding representative search keyword, and refers to the provision information database for this representative search keyword.

16. An information search support system as set forth in claim 15, wherein the search section refers to the provision information database for the representative search keyword and, in addition, for synonyms of this representative search keyword.

17. An information search support system as set forth in claim 15, wherein the detailed keyword collection transmission section prepares a detailed keyword collection describing the representative search keywords which are synonyms of the divided words in place of the divided words or in addition to the divided words.

18. An information search support system as set forth in any one of claims 15 to 17, wherein, a plurality of synonym dictionaries are prepared for the respective fields,
the input keyword acquisition section receives dictionary selection information from the user terminal to designate a synonym dictionary of a particular field, and
the search section refers to the synonym dictionary of the field corresponding to the dictionary selection information for the search keyword.

19. An information search support system as set forth in any one of claims 15 to 17, wherein, a plurality of synonym dictionaries are prepared for the respective fields,
a section is provided to determine a synonym dictionary of a particular field on the basis of a search keyword obtained by the input keyword acquisition section, and
the search section refers to the synonym dictionary determined by the section for the search keyword.

20. A computer program for enabling a computer to function as the information search support system as set forth in any one of claims 1 to 19 by installing and conducting the computer program in the computer.

21. A program storage medium for storing the computer program as set forth in claim 20.
